(19) Europäisches Patentamt
European Patent Office
Office européen des brevets

(11) **EP 2 843 828 B1**

(12) # EUROPÄISCHE PATENTSCHRIFT

(45) Veröffentlichungstag und Bekanntmachung des Hinweises auf die Patenterteilung:
**04.04.2018 Patentblatt 2018/14**

(51) Int Cl.:
*H02P 27/04* $^{(2016.01)}$   *H02P 1/46* $^{(2006.01)}$
*G01B 7/00* $^{(2006.01)}$   *G01B 7/30* $^{(2006.01)}$

(21) Anmeldenummer: **13181724.9**

(22) Anmeldetag: **26.08.2013**

(54) **Verfahren und Vorrichtung zum Bestimmen einer Polradlage einer elektronisch kommutierten elektrischen Maschine**

Method and device for determining a pole wheel position of an electronically commutated electrical machine

Procédé et dispositif pour déterminer la position d'une roue polaire d'une machine électrique commutée électroniquement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.03.2015 Patentblatt 2015/10**

(73) Patentinhaber: **ABB Schweiz AG**
**5400 Baden (CH)**

(72) Erfinder:
• **Feuersaenger, Simon**
**57068 Siegen (DE)**
• **Pacas, Mario**
**57068 Siegen (DE)**

• **Stulz, Christian**
**8008 Zürich (CH)**

(74) Vertreter: **ABB Patent Attorneys**
**c/o ABB Schweiz AG**
**Intellectual Property CH-IP**
**Brown Boveri Strasse 6**
**5400 Baden (CH)**

(56) Entgegenhaltungen:
• **SIMON FEUERSANGER ET AL: "Initial rotor position identification in medium voltage synchronous machines", IECON 2012 - 38TH ANNUAL CONFERENCE ON IEEE INDUSTRIAL ELECTRONICS SOCIETY, IEEE, 25. Oktober 2012 (2012-10-25), Seiten 1852-1857, XP032281267, DOI: 10.1109/IECON.2012.6388919 ISBN: 978-1-4673-2419-9**

EP 2 843 828 B1

**Beschreibung**

Technisches Gebiet

Die Erfindung betrifft elektronisch kommutierte elektrische Maschinen, insbesondere stromrichtergespeiste Synchronmaschinen, und weiterhin Ansteuerverfahren für derartige Maschinen, die auf einer Kenntnis der Polradlage basieren. Weiterhin betrifft die Erfindung Maßnahmen zum sensorlosen Bestimmen einer Polradlage.

Stand der Technik

Zur Ansteuerung von elektrisch erregten Synchronmaschinen ist eine Kenntnis der aktuellen Polradlage erforderlich, um die elektrische Maschine betreiben bzw. regeln zu können. Die Polradlage kann beispielsweise durch einen Positionssensor detektiert werden, der z. B. an der Rotorwelle angeordnet sein kann.

Aus Kostengründen und um die Ausfallwahrscheinlichkeit zu reduzieren, ist für manche Anwendungsgebiete vorgesehen, auf einen Positionssensor zur Erfassung der Polradlage zu verzichten und die Polradlage stattdessen mithilfe elektrischer Größen zu bestimmen. Häufig werden Verfahren angewandt, die einen Abschnitt des Verlaufs der induzierten Spannung in den Statorwicklungen ermitteln und die Zeitpunkte deren Nulldurchgänge einer bestimmten Polradlage zuordnen. Ein solches Verfahren ist jedoch nicht exakt, da die induzierten Spannungen bei geringen Drehzahlen sehr niedrig sind und deren Erfassung daher, insbesondere aufgrund von Störgrößen, nur ungenau erfolgen kann. Insbesondere bei einer Beschleunigung der elektrischen Maschine aus dem Stillstand ist jedoch die Kenntnis der Polradlage erforderlich, da eine nicht auf die Polradlage abgestimmte Ansteuerung zu einer unkontrollierten Bewegung der elektrischen Maschine führen kann.

Wird die Anfangspolradlage jedoch mit einem geeigneten Verfahren korrekt ermittelt, so ist der Hochlauf der elektrischen Maschine möglich, wenn schnell auf eine relativ hohe Drehzahl beschleunigt wird, bei der die obigen Verfahren, die die Polradlage über die Auswertung des Verlaufs der induzierten Spannung ermitteln, problemlos angewandt werden können.

Um bei elektrisch erregten Synchronmaschinen eine Angabe über die Polradlage durch Auswertung elektrischer Größen zu erhalten, kann beispielsweise ein Erregerstromverfahren vorgesehen werden. Dabei wird die Statorwicklung kurzgeschlossen und ein Erregerstrom durch eine Erregerwicklung im Rotor so schnell wie möglich erhöht. Durch die Änderung im Magnetisierungszustand der elektrischen Maschine wird nun eine Spannung in der Statorwicklung induziert, so dass sich ein Statorraumzeiger ausbildet, der in die negative Richtung der d-Achse zeigt. Dieser Strom kann ausgewertet werden und gestattet die Bestimmung der Winkellage der d-Achse, aus der sich eine Angabe zur Polradlage ermitteln lässt.

Weiterhin können durch Einprägung hochfrequenter Spannungsgrößen in die Statorwicklung in verschiedenen Richtungen elektrische Asymmetrien des Rotors ausgewertet werden, woraus auf die Lage des Rotors geschlossen werden kann. Hierfür müssen sich die Stromantworten der hochfrequenten Spannungspulse in Richtung der d- und q-Achse (rotorfestes Koordinatensystem) der Maschine voneinander unterscheiden, damit eine Aussage über die Polradlage getroffen werden kann.

Beispielsweise offenbart die Druckschrift J. Holtz, "Initial Rotor Polarity Detection and Sensorless Control of PM Synchronous Machines", Industry Applications Conference, 41st IAS Annual Meeting, Conference Record of the 2006 IEEE, Vol. 4, 8.-12. Oktober 2006, S. 2040-2047, ein Verfahren zum Bestimmen einer Polradlage einer elektrischen Maschine im Stillstand oder bei niedrigen Geschwindigkeiten anhand der Injektion eines oszillierenden Hochfrequenzträgersignals. Um eine durch das Einprägen des hochfrequenten Trägersignals mehrdeutige Polradlageinformation aufzulösen, wird die Polarität des Permanentmagneten durch die Injektion von zwei kurzen, vorzeichenverschiedenen und in Richtung der geschätzten Magnetachse ausgerichteten Strompulsen bestimmt, indem das Sättigungsverhalten der Hauptinduktivität untersucht wird. Jedoch verhindern oftmals die Dämpferwicklungen der elektrischen Maschine die Auswertung des Sättigungszustands, so dass die Polradlage mit diesem Verfahren nur unter bestimmten Bedingungen detektiert werden kann.

In der Druckschrift Feuersänger, S., Pacas, M., "Initial Rotor Position Detection in Electrically Excited Medium Voltage Synchronous Machines", PCIM 2012, Nürnberg, Germany, May 8-10, 2012, wird ein Verfahren offenbart, das auf dem Einprägen niederfrequenter Signale basiert, so dass die Dämpferwicklungen der elektrischen Maschine eine Auswertung des Sättigungszustands der Maschine nicht behindern. Die niederfrequenten Spannungspulse, die in die Statorwicklung eingeprägt werden, werden in einer Pulsfrequenz gewählt, bei der die elektrische Maschine den größten Unterschied zwischen dem d-Anteil und dem q-Anteil der Admittanzen aufweist. Dieser Frequenzbereich liegt üblicherweise zwischen 1 und wenigen 10 Hz, so dass bei einer Anregung mit Spannungsimpulsen in diesem Frequenzbereich eine Identifikation der Polradlage über einen Admittanzunterschied möglich ist.

Um den Admittanzunterschied für den betreffenden Frequenzbereich zur Identifikation der Polradlage zu nutzen, werden Spannungstestsignale in die Statorwicklung eingeprägt, wobei ein Erregerstrom durch die Erregerwicklung des Rotors zugelassen werden muss, da sonst hohe Überspannungen in der Erregerwicklung auftreten können. Die Spannungstestsignale müssen bei diesem Verfahren in verschiedenen Raumzeigerrichtungen in die Statorwicklung eingeprägt werden, so dass die Stromantworten an verschiedenen Positionen überprüft werden können. Die resultierenden Stromantworten des Statorstroms sowie des Erregerstroms sind abhängig von der Winkeldifferenz zwischen dem Raumzeiger des eingeprägten Testsignals und dem der tatsächlichen d-Achse des Rotors. Die Richtungen der Spannungspulse können bei diesem Verfahren jedoch nicht im Voraus festgelegt werden, sondern richten sich unter anderem nach den Ergebnissen der Messungen der Stromantworten der vorherigen Spannungspulse. Die Richtungen der resultierenden Spannungspulse ist demnach willkürlich, was insbesondere bei Mittelspannungsumrichtern, die mit geringer Taktfrequenz arbeiten, zu ungenauen Ergebnissen führt, da die Spannungspulse nicht gut reproduziert werden können.

Als Indikatorgröße für den Statorstrom wird während der Einprägung des Spannungspulses der Effektivwert der Statorstromkomponente in Pulsrichtung ermittelt. Ein Erregerstromindikator wird nach dem Vorzeichen der Erregerstromänderung während eines ersten Viertels des eingeprägten Pulses ermittelt. Aus dem Effektivwert der Statorstromkomponente werden der Gleichanteil sowie der Spitzenwert ermittelt und daraus vier mögliche Polradlagewinkel bestimmt. Zur Auswahl der Polradlagewinkel, die der tatsächlichen Polradlage entsprechen, werden nun zwei weitere Pulse in die ermittelten Polradlagewinkel eingeprägt und die entsprechenden Indikatorgrößen gemessen. Abhängig von der Winkelposition, bei der der Statorstromindikator ein lokales Maximum aufweist, sowie abhängig von einem Vorzeichen des Erregerstromindikators kann dann die aktuelle Polradlage ermittelt werden.

Da insbesondere bei Mittelspannungsumrichtern zum Betreiben der elektrischen Maschine die Periodendauer des Modulationsverfahrens aus technischen Gründen vergleichsweise lange gewählt werden muss, ist die Generierung der einzuprägenden Spannungspulse entsprechend an die Periodendauer des zum Betreiben der elektrischen Maschine verwendeten Modulationsverfahrens gebunden. Die resultierenden Antworten im Stator- und Erregerstrom weisen demnach einen beträchtlichen Oberschwingungsanteil auf, was insbesondere bei dem zuvor erwähnten Erregerstromindikator zu Messfehlern führen kann, da dieser durch Messen des Erregerstroms zu zwei Zeitpunkten gebildet wird.

Offenbarung der Erfindung

Eine Aufgabe der vorliegenden Erfindung besteht daher darin, ein verbessertes Verfahren zum Ermitteln der Polradlage einer elektrisch erregten elektrischen Maschine im Stillstand oder im stillstandsnahen Bereich zur Verfügung zu stellen, mit dem bei der Verwendung von Mittelspannungsumrichtern mit langer Periodendauer des Modulationsverfahrens eine zuverlässigere Auswertung möglich ist.

Diese Aufgabe wird durch das Verfahren zum Bestimmen der Polradlage im Stillstand einer elektrisch erregten elektrischen Maschine gemäß Anspruch 1 sowie durch die Vorrichtung, das Motorsystem und das Computerprogrammprodukt gemäß den nebengeordneten Ansprüchen gelöst.

Weitere vorteilhafte Ausgestaltungen sind in den abhängigen Ansprüchen angegeben.

Gemäß einem ersten Aspekt ist ein Verfahren zum Bestimmen einer Polradlage einer elektrisch erregten elektrischen Maschine vorgesehen, das die folgenden Schritte umfasst:

- Einprägen von Spannungstestsignalen bei mehreren Raumzeigerwinkeln mit einer Grundfrequenz, die in einem Frequenzbereich liegt, in dem bei insbesondere um 90° versetzten Raumzeigerwinkeln ein Admittanzunterschied vorliegt;
- Ermitteln der jeweiligen resultierenden Werte einer Erregerstromindikatorgröße als Fourier-Koeffizienten des aus dem Spannungstestsignal resultieren Erregerstroms bezüglich der Grundfrequenz des Spannungstestsignals bei den entsprechenden Raumzeigerwinkeln; und
- Bestimmen der Polradlage anhand des Verlaufs der Erregerstromindikatorgröße.

Das obige Verfahren schlägt die Verwendung einer Indikatorgröße vor, die sich bei Einprägen von Spannungstestsignalen aus dem Verlauf des Statorstroms und des Erregerstroms ermitteln lässt. Insbesondere entspricht die Indikatorgröße dem Fourier-Koeffizienten bei der Anregungsfrequenz der Spannungstestsignale.

Weiterhin kann das Verfahren folgende Schritte umfassen:

- Ermitteln der jeweiligen resultierenden Werte einer Statorstromindikatorgröße als Fourier-Koeffizienten des aus dem Spannungstestsignal resultierenden Statorstroms bezüglich der Grundfrequenz des Spannungstestsignals bei den entsprechenden Raumzeigerwinkeln; und
- Bestimmen der Polradlage anhand des jeweiligen Verlaufs der Statorstromindikatorgröße und der Erregerstromindikatorgröße.

Dadurch sind die Indikatorgrößen so gewählt, dass nur die Anteile des Statorstroms und des Erregerstroms ausgewertet werden, die im Frequenzbereich der Anregung der Spannungstestsignale liegen. Dadurch bleiben Oberwellenanteile unberücksichtigt. Die so ermittelten Indikatorgrößen zeigen über die elektrische Winkellage des Rotors periodische Verläufe, wobei ein lokales Maximum des Statorstromindikators und ein lokales Minimum des Erregerstromindikators die tatsächliche Winkellage des Polrades angeben. Die oben vorgeschlagenen Indikatorgrößen erwiesen sich bei einem Mittelspannungsantrieb mit einem Mittelspannungsumrichter mit relativ hoher Periodendauer des Modulationsverfahrens als wesentlich robuster als in bisherigen Verfahren.

Weiterhin ist vorteilhaft, dass die einzuprägenden Spannungspulse zum Großteil in vordefinierten Richtungen in die Statorwicklung eingeprägt werden. Die Richtungen können so gewählt werden, so dass die Spannungspulse optimal durch einen Mittelspannungsumrichter mit langer Periodendauer des Modulationsverfahrens realisiert werden können.

Weiterhin kann die Polradlage an der Position eines Minimums des Verlaufs der Erregerstromindikatorgröße bestimmt werden.

Gemäß einer Ausführungsform können die Amplituden des ungeraden und geraden Anteils der Grundschwingung der Erregerstromindikatorgröße ermittelt werden, wobei die Polradlage aus den Amplituden des ungeraden und geraden Anteils ermittelt wird.

Es kann vorgesehen sein, dass die Polradlage als die Winkellage bestimmt wird, bei der der Verlauf der Statorstromindikatorgröße ein lokales Maximum aufweist und die entsprechende Erregerstromindikatorgröße ein negatives Vorzeichen aufweist.

Weiterhin können die Amplituden des ungeraden und geraden Anteils der zweiten Harmonischen der Statorstromindikatorgröße ermittelt werden, wobei eine mehrdeutige Angabe der Polradlage aus den Amplituden des ungeraden und geraden Anteils ermittelt wird, wobei ein weiteres Spannungstestsignal in Richtung einer vorgegebenen geschätzten Polradlage eingeprägt wird, um die Mehrdeutigkeit durch das Vorzeichen der dann gemessenen Erregerstromindikatorgröße zu eliminieren.

Insbesondere kann das Spannungstestsignal in Form von Rechteckimpulsen eingeprägt werden.

Gemäß einem weiteren Aspekt ist eine Vorrichtung zum Bestimmen einer Polradlage einer elektrisch erregten elektrischen Maschine vorgesehen, wobei die Vorrichtung ausgebildet ist, um:

- Spannungstestsignale bei mehreren Raumzeigerwinkeln mit einer Grundfrequenz einzuprägen, die in einem Frequenzbereich liegt, in dem bei insbesondere um 90° versetzten Raumzeigerwinkeln ein Admittanzunterschied vorliegt;
- die jeweiligen resultierenden Werte einer Erregerstromindikatorgröße als Fourier-Koeffizienten des aus dem Spannungstestsignal resultieren Erregerstroms bezüglich der Grundfrequenz des Spannungstestsignals bei den entsprechenden Raumzeigerwinkeln zu ermitteln; und
- die Polradlage anhand des Verlaufs der Erregerstromindikatorgröße zu bestimmen.

Gemäß einem weiteren Aspekt ist ein Motorsystem mit einer elektrischen Maschine, einer Treiberschaltung zum Betreiben der elektrischen Maschine und der obigen Vorrichtung vorgesehen.

Gemäß einem weiteren Aspekt ist ein Computerprogrammprodukt vorgesehen, das einen Programmcode enthält, der, wenn er auf einer Datenverarbeitungsvorrichtung ausgeführt wird, das obige Verfahren durchführt.

Kurzbeschreibung der Zeichnungen

Ausführungsformen werden in Verbindung mit den Zeichnungen und der nachfolgenden Beschreibung ausführlicher erläutert. Es zeigen:

Figur 1        eine schematische Darstellung eines Motorsystems mit einer elektrisch erregten elektrischen Maschine, die über eine Treiberschaltung angesteuert wird;

Figur 2        eine schematische Darstellung der Statorwicklungen und der Erregerwicklung in der elektrisch erregten elektrischen Maschine der Figur 1;

Figur 3        einen Admittanzfrequenzgang für eine Synchronmaschine;

Figur 4        ein Flussdiagramm zur Darstellung eines Verfahrens zum Bestimmen der Polradlage einer elektrischen Maschine;

Figuren 5a und 5b        einen beispielhaften zeitlichen Verlauf eines möglichen Spannungstestsignals und eine entsprechende Pulsantwort der Statorstromkomponente in der Raumzeigerrichtung des Spannungstestsignals;

| Figuren 6a bis 6c | Pulsantworten auf ein eingeprägtes Spannungstestsignal bei verschiedenen Winkeldifferenzen $\Delta\gamma = 0°$, $\Delta\gamma = 90°$ und $\Delta\gamma = 180°$ zu der tatsächlichen Polradlage (d-Anteil des Erregerstroms); und |
|---|---|
| Figur 7a und 7b | normierte Verläufe der Statorstrom- und Erregerstromindikatorgrößen über dem Raumzeigerwinkel des eingeprägten Spannungspulses. |

Beschreibung von Ausführungsformen

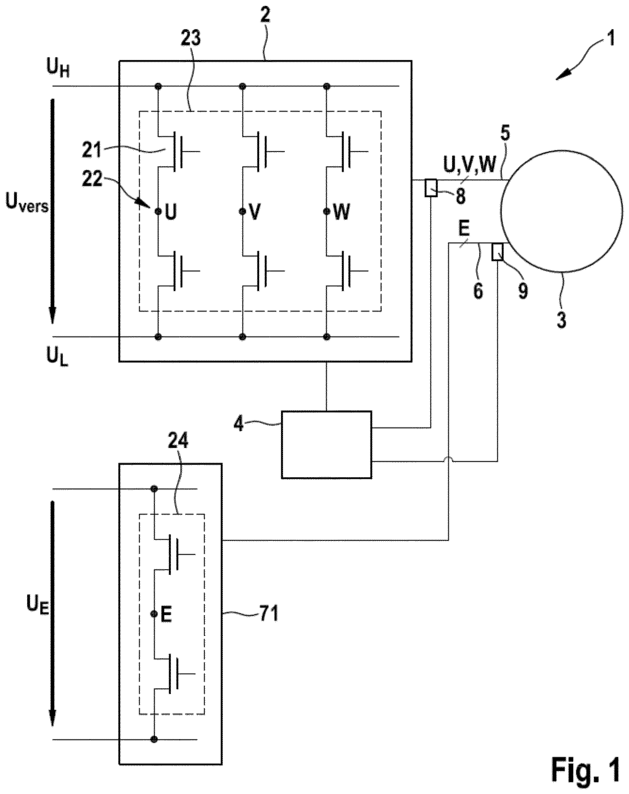

Figur 1 zeigt eine schematische Darstellung eines Motorsystems 1 mit einer Treiberschaltung 2 und einer (im nachfolgend beschriebenen Beispiel dreiphasigen) elektrisch erregten elektrischen Maschine 3. Die Treiberschaltung 2 dient dazu, Phasenspannungen U, V, W für die Statorwicklungen 31 der elektrisch erregten elektrischen Maschine 3 sowie entsprechende Phasenströme auf den Phasenleitungen 5 zur Verfügung zu stellen. Der Teil der Treiberschaltung 2 für die Erzeugung der Phasenspannungen U, V, W kann beispielsweise als B6-Umrichter 23 ausgebildet sein, wobei der B6-Umrichter mehrere Inverterschaltungen 22 mit jeweils zwei in Reihe geschalteten Halbleiterschaltern 21 aufweist, die vorzugsweise als Leistungshalbleiterschalter, wie beispielsweise als Leistungs-MOSFET, Thyristor, IGBT, IGCT oder dergleichen ausgebildet sein können. Die elektrische Energie zum Betreiben der elektrischen Maschine 3 erhält die Treiberschaltung 2 von einer angelegten Versorgungsspannung $U_{vers}$.

Weiterhin kann eine Erregerschaltung 7 vorgesehen sein, die einen Erregerstrom-Umrichter 71 aufweist. Der Erregerstrom-Umrichter 71 wird von einer Erregerversorgungsspannung $U_E$, die niedriger ist als die Versorgungsspannung $U_{vers}$, gespeist und ist ausgebildet, um eine Erregerspannung E bzw. einen Erregerstrom auf der Erregerstromleitung 6 für eine Erregerwicklung 32 in einem Polrad, d.h. dem Rotor 33, der elektrischen Maschine 3 bereitzustellen, wobei die Erregerspannung E bzw. der Erregerstrom beispielsweise über (nicht gezeigte) Schleifer auf den Rotor 33 übertragen werden kann. Alternativ kann mithilfe der Erregerspannung E auch ein Magnetfeld außerhalb des Rotors 33 generiert werden, das von außen in den Rotor 33 eingeprägt wird.

Die Phasenleitungen 5 können mit Phasenstromdetektoren 8 zum Messen der Phasenströme und die Erregerstromleitung 6 kann mit einem Erregerstromdetektor 9 zum Messen des Erregerstroms versehen sein.

Die Treiberschaltung 2 wird über eine Steuereinheit 4 angesteuert, die gemäß einem Modulationsverfahren bzw. einem Kommutierungsschema in der Treiberschaltung 2 vorgesehene Halbleiterschalter 21 ansteuert, um Phasenleitungen 5 bzw. die Erregerstromleitung 6 mit einem hohen Versorgungsspannungspotenzial $U_H$ oder einem niedrigen Versorgungsspannungspotenzial $U_L$ der Versorgungsspannung $U_{vers}$ zu verbinden. Die Treiberschaltung 2 ist mit den Phasenstromdetektoren 8 dem Erregerstromdetektor 9 verbunden, um Angaben über die fließenden Phasenströme und den fließenden Erregerstrom zu erhalten. Die Treiberschaltung 2 dient zum Bereitstellen von drei Phasenspannungen U, V, W (entsprechend der Dreiphasigkeit der elektrischen Maschine 3), die jeweils einen Raumzeigerwinkel, eine Amplitude des Raumzeigers und ein daraus resultierendes, entsprechend gerichtetes Statormagnetfeld bewirken.

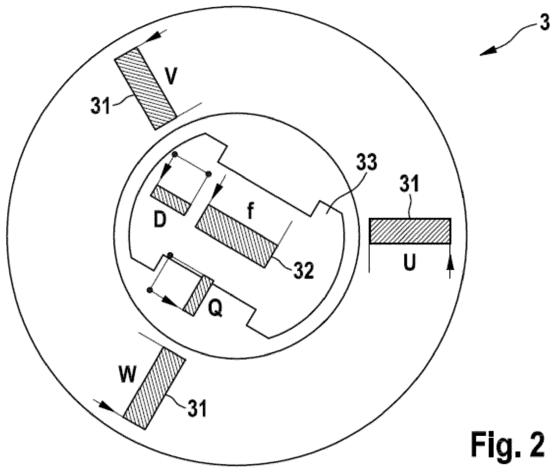

Eine schematische Darstellung der elektrisch erregten elektrischen Maschine 3 ist in Figur 2 dargestellt. Man erkennt die durch die Statorwicklung 31 bewirkten Induktivitäten 31, die den drei Phasenspannungen U, V, W zugeordnet sind und durch diese bestromt werden. Der Rotor 33 ist mit einer Erregerwicklung 32 versehen, die eine entsprechende Induktivität 31 hervorruft. Strom- und Spannungszeigeranteile der Statorspannung, deren Richtung jeweils der Ausrichtung der Erregerwicklung 32 im Rotor 33 entspricht, entsprechen einem d-Anteil; die Richtungen, die senkrecht dazu verlaufen, entsprechen einem q-Anteil des Raumzeigers der Statorspannung. Der d-Anteil und der q-Anteil entsprechen jeweils den Richtungen eines rotorfesten Koordinatensystems.

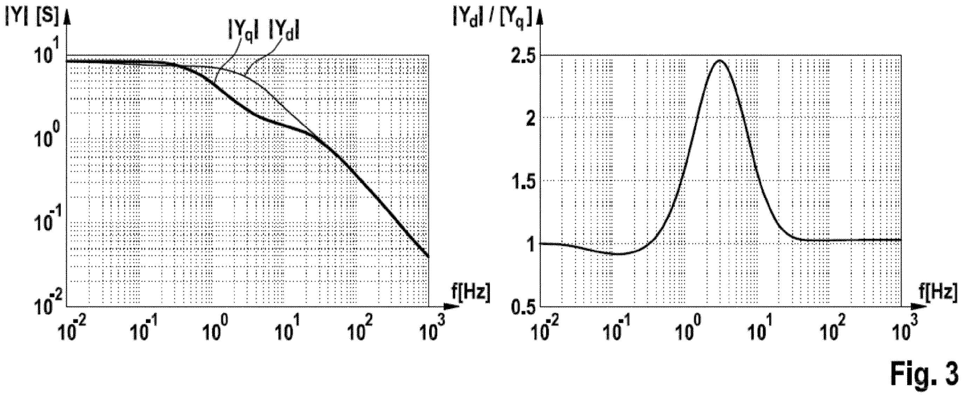

Figur 3 zeigt einen Admittanzfrequenzgang der absoluten Admittanzen $|Y|$ sowie der relativen $|Y_d|/|Y_q|$ für eine Synchronmaschine der Art der elektrischen Maschine 3 bei einem konstanten Erregerstrom durch die Erregerwicklung 32. Ein solcher Frequenzgang ist typisch für Synchronmaschinen und bewirkt große Unterschiede im Amplitudengang zwischen dem d-Anteil und dem q-Anteil der Statorspannung in dem Frequenzbereich zwischen 1 und wenigen 10 Hz, jedoch nur geringe Unterschiede für höhere Frequenzen. Bei Anregung der Statorwicklung 31 mit hochfrequenten Anregungsspannungen ist eine Identifikation einer Polradlage, d.h. der Rotorlage, demnach nur bedingt über eine Auswertung des Admittanzunterschieds möglich.

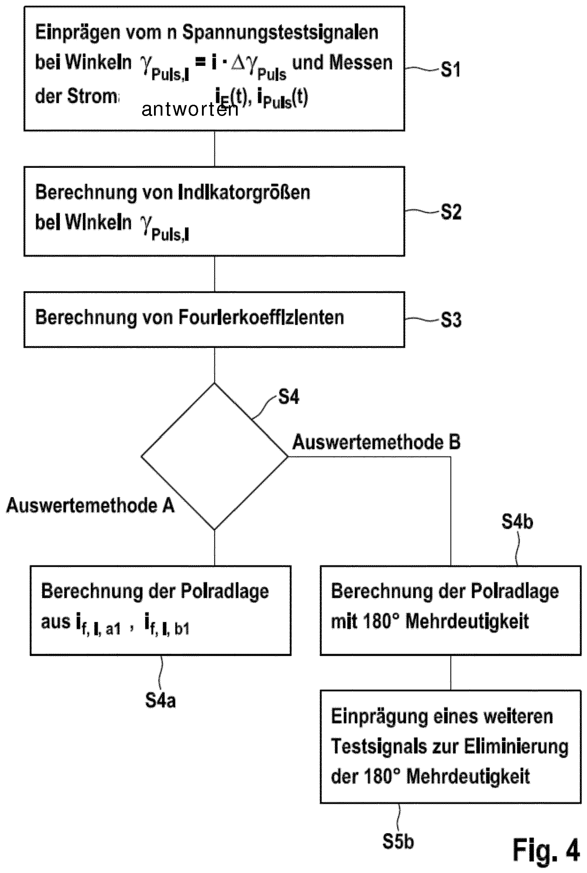

Anhand des Flussdiagramms der Figur 4 wird im Folgenden das Verfahren zur Bestimmung der Polradlage des Rotors 33 der elektrischen Maschine 3 ausführlicher beschrieben.

In Schritt S1 wird ein Spannungstestsignal in die Statorwicklung 31 eingeprägt, und zwar mit einer Frequenz, die in dem Frequenzbereich eines signifikanten Unterschieds zwischen d-Anteil und q-Anteil der Admittanzen $|Y_d|$, $|Y_q|$ der elektrischen Maschine 3 liegt. Dieses Einprägen des Spannungstestsignals in die Statorwicklung 31 ist jedoch nur bei durch die Erregerwicklung 32 fließendem Erregerstrom zulässig, da sonst Überspannungen an der Erregerwicklung 32 auftreten können. Der Erregerstrom bewirkt zudem eine Magnetisierung des Rotors 33, die bei Anlegen der Spannungstestsignale zu einer ungewollten Bewegung der elektrischen Maschine 3 führen kann. Daher sollte die Amplitude der Spannungstestsignale in der Regel 2% der Nennspannung, vorzugsweise 1% der Nennspannung, insbesondere 0,5 % der Nennspannung nicht überschreiten. Die Spannungstestsignale werden so an die Statorwicklungen 31 angelegt, dass verschiedene Raumzeigerwinkel in die Statorwicklungen 31 eingeprägt werden können, um eine entsprechende Stromantwort an verschiedenen Raumzeigerwinkeln auszuwerten.

Der Raumzeigerwinkel des eingeprägten Spannungstestsignals wird im folgendem $\gamma_{Puls}$ genannt. Alle im Folgenden genannten Raumzeigerwinkel sind als elektrische Lagewinkel (elektrische Polradlage) zu verstehen, also mit eingerechneter Polpaarzahl.

Bei diesem Verfahren werden nacheinander Spannungstestsignale mit folgenden Raumzeigerwinkeln in die Statorwicklung eingeprägt:

$$\gamma_{Puls,i} = i \cdot \Delta\gamma_{Puls} \quad \text{i=0,1,2... (n-1)}$$

Wobei *n* die Anzahl an eingeprägten Pulsen darstellt. Die Anzahl an Pulsen *n* kann bei diesem Verfahren beliebig auf einen Wert 3 oder mehr eingestellt werden.

$\Delta\gamma_{Puls}$ bezeichnet einen konstanten Winkelabstand zwischen zwei Winkeln der eingeprägten Spannungstestsignalraumzeiger. Der Winkelabstand $\Delta\gamma_{Puls}$ muss so gewählt werden, dass eine der beiden folgenden Gleichungen erfüllt wird:

$$n \cdot \Delta\gamma_{Puls} = 180°$$

oder

$$n \cdot \Delta\gamma_{Puls} = 360°$$

Werden die Parameter *n* und $\Delta\gamma_{Puls}$ unter den wie hier beschrieben Anweisungen gewählt, kann die Rotorlage mit dem im Schritt S4a oder S4b beschriebenen Verfahren ermittelt werden.

Es sei angemerkt, dass ein zusätzlicher Spannungstestsignalraumzeiger, je nach Auswertemethode (siehe Schritt S5b) mit nicht vorher festgelegtem Winkelwert eingeprägt werden kann (siehe Schritt S5b).

Die einzelnen Statorspannungen können durch eine Koordinatentransformation wie folgt berechnet werden:

$$u_\alpha(t) = u_{Puls}(t) \cos(\gamma_{Puls})$$

$$u_\beta(t) = u_{Puls}(t) \sin(\gamma_{Puls})$$

$$u_{U0}(t) = u_\alpha(t) = u_{Puls}(t) \cos(\gamma_{Puls})$$

$$u_{V0}(t) = u_\alpha(t) \cos(120°) + u_\beta(t) \cos(30°) = u_{Puls}(t) \cos(\gamma_{Puls} - 120°)$$

$$u_{W0}(t) = u_\alpha(t) \cos(240°) + u_\beta(t) \cos(150°) = u_{Puls}(t) \cos(\gamma_{Puls} - 240°)$$

wobei $u_\alpha(t)$, $u_\beta(t)$ um 90° zueinander versetzten Spannungsanteilen der Statorspannung in einem statorfesten Koordinatensystem und $u_{U0}(t)$, $u_{V0}(t)$, $u_{W0}(t)$ den einzelnen, zur Generierung des Spannungsraumzeigers der Statorspannung durch die effektiv zueinander um 120° versetzt angeordneten Statorwicklungen 31 entsprechen.

Die Spannungstestsignale können beispielsweise als pulsförmige Spannungen gewählt werden, da sich diese bei relativ kleinen Amplitudenwerten am einfachsten durch die Treiberschaltung 2 reproduzieren lassen.

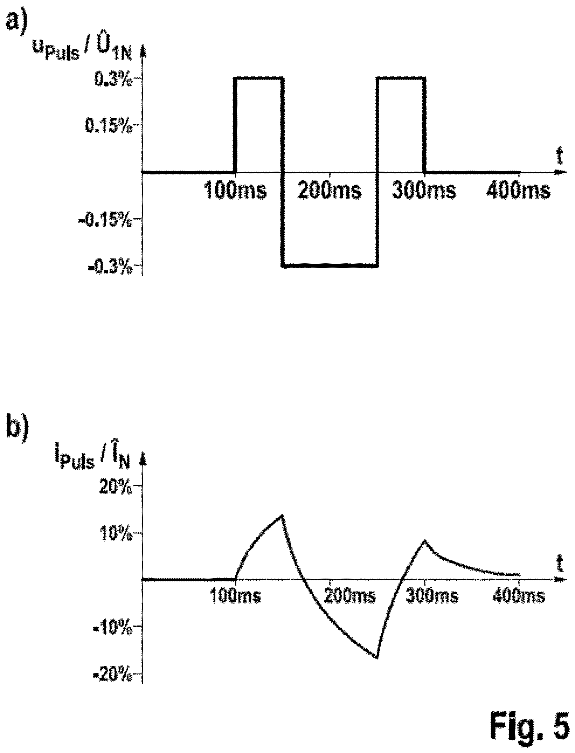

In Figur 5a ist beispielhaft ein zeitlicher Verlauf eines möglichen Spannungstestsignals dargestellt, das durch eine Pulsweitenmodulation der Treiberschaltung 2 erzeugt werden kann. Eine entsprechende Pulsantwort der Statorstromkomponente in der Raumzeigerrichtung des Spannungstestsignals ist in Fig. 5b als $i_{Puls}(t)$ dargestellt. Die Statorstromkomponente lässt sich durch Koordinatentransformation mit dem Winkel $\gamma_{Puls}$ aus den gemessenen Phasenströmen errechnen. Die Statorstromkomponente $i_{Puls}(t)$ weist somit einen Raumzeigerwinkel auf, der dem Raumzeigerwinkel des Spannungstestsignals entspricht. Es gilt:

$$i_{Puls}(t) = i_U(t)\cos(\gamma_{Puls}) + i_V(t)\cos(120° - \gamma_{Puls}) + i_W(t)\cos(240° - \gamma_{Puls}).$$

Die Frequenz des Spannungstestsignals entspricht vorzugsweise einer Frequenz, bei der der Admittanzunterschied zwischen d und q-Achse erkannt werden kann. Der resultierende Statorstrom und der resultierende Erregerstrom sind abhängig von der Winkeldifferenz $\Delta\gamma = \gamma_{Puls} - \gamma$ zwischen dem Winkel des eingeprägten Spannungsraumzeigers $\gamma_{Puls}$ und der Polradlage $\gamma$ und gestatten demnach die Bestimmung der Polradlage.

Während der Einprägung der jeweiligen Spannungstestsignale in den jeweiligen Richtungen werden die resultierenden Statorströme und Erregerströme gemessen bzw. ermittelt und bezüglich des Raumzeigerwinkels $\gamma_{Puls}$ des Spannungstestsignals $u_{Puls}(t)$ zur Auswertung gespeichert.

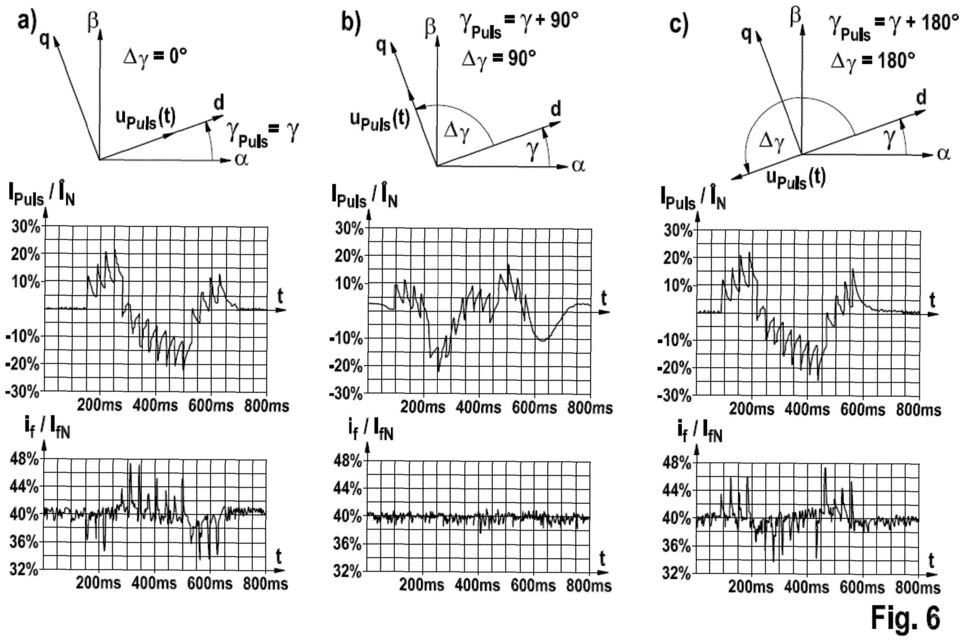

In den Fig. 6a bis 6c sind die Pulsantworten des Statorstroms und des Erregerstroms bei verschiedenen Winkeldifferenzen $\Delta\gamma = 0°$, $\Delta\gamma = 90°$ und $\Delta\gamma = 180°$ dargestellt. Für die Auswertung der Stromantworten auf die Spannungstestsignale ist es erforderlich, die Information über den zeitlichen Verlauf des Statorstroms und des Erregerstroms in jeweils eine Indikatorgröße zu konzentrieren. Dazu wird eine Statorstromkomponente in Pulsrichtung $i_{Puls}(t)$ für die Ermittlung der Statorstromindikatorgröße $i_{Puls,I}$ sowie eine Erregerstromkomponente für die Ermittlung der Erregerstromindikatorgröße $i_{f,I}$ verwendet. Die beiden neuen Indikatorgrößen $i_{Puls,I}$ und $i_{f,I}$ werden in Schritt S2 wie folgt berechnet:

$$i_{Puls,I} = \frac{1}{T_{Puls}} \int_0^{T_{Puls}} i_{Puls}(t) \cos(2\pi f_{Puls} t)\, dt$$

$$i_{f,I} = \frac{1}{T_{Puls}} \int_0^{T_{Puls}} i_f(t) \cos(2\pi f_{Puls} t)\, dt$$

wobei $T_{Puls}$ der Periodendauer des eingeprägten Spannungstestsignals und $f_{Puls} = \frac{1}{T_{Puls}}$ der Frequenz des eingeprägten Spannungstestsignals entsprechen. Die beiden so eingeführten Indikatorgrößen $i_{Puls,I}$ und $i_{f,I}$ entsprechen den Koeffizienten der diskreten Fourier-Transformation für die Grundwelle der Statorstromkomponente und der Erregerstromkomponente in Richtung des Raumzeigerwinkels des eingeprägten Spannungstestsignals.

Die beiden Indikatorgrößen werden für jeden Winkel der in Schritt S1 eingeprägten Spannungstestsignale berechnet. Im Folgenden werden die Indikatorgrößen als Funktion des Winkels als $i_{Puls,1}(\gamma_{Puls})$, $i_{f,1}(\gamma_{Puls})$ dargestellt. Dabei bezeichnet $i_{Puls,1}(\gamma_{Puls})$ den Wert des Statorstromindikators der bei dem Spannungstestsignal mit dem Winkel $\gamma_{Puls}$ ermittelt wurde.

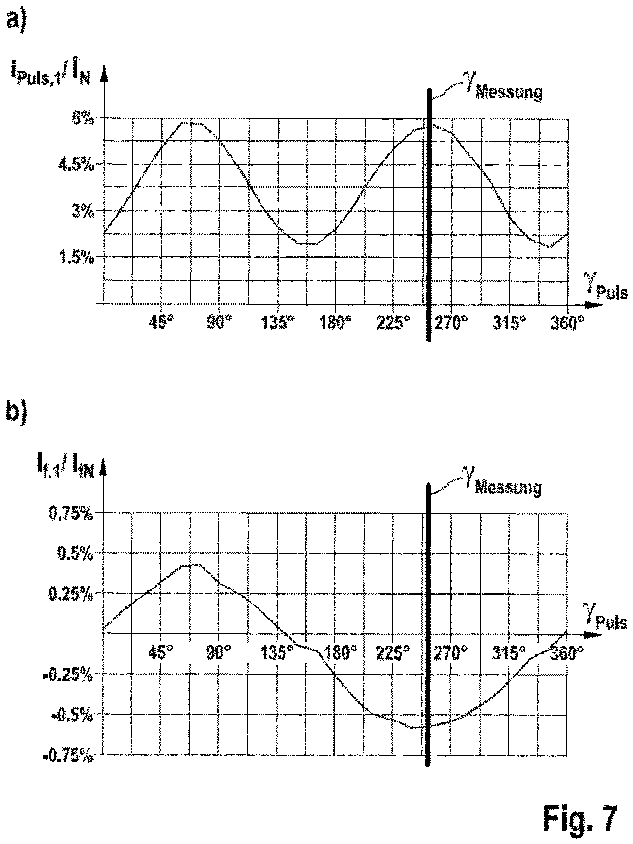

Figuren 7a und 7b zeigen beispielsweise die normierten Verläufe der Indikatorgrößen $i_{Puls,I}$ und $i_{f,I}$ bei Spannungstestsignalen bei verschiedenen Raumzeigerwinkeln, die in 30°-Schritten des Raumzeigerwinkels der Spannungstestsignale bei stehender elektrischer Maschine 3 in die Statorwicklung 31 eingeprägt sind. Die senkrechte Linie gibt die tatsächliche Polradlage des Rotors 33 der elektrischen Maschine 3 an.

Die Verläufe der Indikatorgrößen $i_{Puls,I}$ und $i_{f,I}$, die in den Fig. 7a und 7b gezeigt sind, entsprechen einer Abtastung bei verschiedenen um $\Delta\gamma_{Puls}$ voneinander beabstandeten Raumzeigerwinkeln, wobei · $\Delta\gamma_{Puls}$ im gezeigten Ausführungsbeispiel 30° beträgt.

Aus den gemessenen Werten der Indikatorgröße an den verschiedenen Winkelpositionen wird nun der gesamte Verlauf der Indikatorgrößen über den Winkel $\gamma$ interpoliert. Dafür wird entsprechend der Darstellung der Figur 7a angenommen, dass der Statorstromindikator $i_{Puls,I}(\gamma_{Puls})$ aus einem Gleichanteil und einem Wechselanteil mit der Frequenz der zweiten Harmonischen bezogen auf den Winkel $\gamma_{Puls}$ besteht. Da für die Polradlageerkennung nur die Winkelpositionen interessant sind, bei denen die Statorstromindikatorgröße ein lokales Maximum aufweist, wird der Gleichanteil der Statorstromindikatorgröße im Folgenden nicht weiter berücksichtigt.

Mithilfe der diskreten Fourier-Transformation können die Amplituden des geraden und ungeraden Anteils der zweiten Harmonischen des Statorstromindikators ($i_{puls,I,a2}$ und $i_{puls,I,b2}$ in Schritt S3 jeweils wie folgt errechnet werden:

$$i_{Puls,I,a2} = \frac{1}{n} \sum_0^{n-1} i_{Puls,I}(i \cdot \Delta\gamma_{Puls}) \cos(2i \cdot \Delta\gamma_{Puls})$$

$$i_{Puls,I,b2} = \frac{1}{n} \sum_{0}^{n-1} i_{Puls,I}(i \cdot \Delta\gamma_{Puls}) \sin(2\mathrm{i} \cdot \Delta\gamma_{Puls})$$

Analog können auch die Werte der Erregerstromindikatorgröße $i_{f,I}(\gamma_{Puls})$ interpoliert werden, wobei hier kein Wechselanteil mit der zweiten Harmonischen auftritt, sondern stattdessen mit der Grundschwingung. Es werden demnach in Schritt S3 die Amplituden des geraden und ungeraden Anteils der Grundschwingung des Erregerstromindikatorgröße $i_{f,I,a1}$ und $i_{f,I,b1}$ jeweils wie folgt berechnet:

$$i_{f,I,a1} = \frac{1}{n} \sum_{0}^{n-1} i_{f,I}(i \cdot \Delta\gamma_{Puls}) \cos(\mathrm{i} \cdot \Delta\gamma_{Puls})$$

$$i_{f,I,b1} = \frac{1}{n} \sum_{0}^{n-1} i_{f,I}(i \cdot \Delta\gamma_{Puls}) \sin(\mathrm{i} \cdot \Delta\gamma_{Puls})$$

wobei $i_{Puls,I,a2}$ einem geraden Fourier-Koeffizienten der 2. Harmonischen der Statorstromindikatorgröße, $i_{Puls,I,b2}$ einem ungeraden Fourier-Koeffizienten der 2. Harmonischen der Statorstromindikatorgröße, $i_{f,I,a1}$ einem geraden Fourier-Koeffizienten der Grundschwingung der Erregerstromindikatorgröße, $i_{f,I,b1}$ einem ungeraden Fourier-Koeffizienten der Grundschwingung der Erregerstromindikatorgröße, n der Anzahl der Messungen, $\Delta\gamma_{Puls}$ dem Winkelabstand zwischen den Messungen, $i_{Puls,I}(i \cdot \Delta\gamma_{Puls})$ einer gemessenen Statorstromindikatorgröße bei Einprägung eines Spannungstestsignals in $\gamma_{Puls} = i \cdot \Delta\gamma_{Puls}$ $i_{f,I}(\gamma_{Puls})$, einer gemessenen Erregerstromindikatorgröße bei Einprägung eines Spannungstestsignals in $\gamma_{Puls} = i \cdot \Delta\gamma_{Puls}$ entsprechen.

Basierend auf den so erhaltenen Koeffizienten der diskreten Fourier-Transformation lassen sich zwei Auswertemethoden A, B zur Auswertung der Daten unterscheiden.

Erstens kann es gemäß Auswertemethode A (Schritt S4a) bei bestimmten Konfigurationen ausreichend sein, lediglich die Erregerstromindikatorgröße zu verwenden. Die Polradlage kann aus der Erregerstromindikatorgröße ermittelt werden, indem aus den beiden nun errechneten Erregerstromindikatorgrößen $i_{f,I,a1}$ und $i_{f,I,b1}$ genau die Winkelposition, an der die Erregerstromindikatorgröße am kleinsten ist, wie folgt errechnet wird:

$$\gamma = arctan2\big(i_{f,I,b1}, i_{f,I,a1}\big) + 180°.$$

Dieser Winkelwert entspricht im Idealfall exakt der Polradlage. Der Erregerstrom kann jedoch nur bei elektrischen Maschinen mit einer Erregung über Schleifringe direkt gemessen werden und muss bei bürstenlos erregten elektrischen Maschinen anhand der Statorströme des Erregersystems rekonstruiert werden. Eine Polradlageermittlung ist entsprechend ungenau, wenn die Rekonstruktion des Erregerstroms fehlerbehaftet ist.

Zweitens kann gemäß Auswertemethode B (Schritt 4b) die Polradlage mithilfe der Statorstromindikatorgröße $i_{Puls,I}$ ermittelt werden. Die Ermittlung der Polradlage $\gamma$ aus der Statorstromindikatorgröße $i_{Puls,I}$ erfolgt mit einer 180°-Mehrdeutigkeit in Schritt S4b.

Entsprechend folgender Beziehung:

$$\gamma = \frac{1}{2} arctan2\big(i_{Puls,I,b1}, i_{Puls,I,a1}\big)$$

kann einer der Lagewinkel $\gamma$ der Polradlage errechnet werden, bei dem die Statorstromindikatorgröße ein lokales Maximum aufweist. Diese Position entspricht entweder der Winkellage der positiven oder der negativen d-Achse.

Anschließend kann ein weiterer Spannungsimpuls in Richtung der geschätzten Polradlage angegeben werden (Schritt S5b), um durch das Vorzeichen der dann gemessenen Erregerstromindikatorgröße $i_{f,I}$ die 180°-Mehrdeutigkeit zu eliminieren.

$$\gamma = \frac{1}{2} arctan2\left(i_{Puls,I,b1}, i_{Puls,I,a1}\right)$$

Hier wird ein weiterer Spannungspuls in die durch die obige Gleichung ermittelte Winkellage eingeprägt und die Erregerstromindikatorgröße nach

$$i_{f,I} = \frac{1}{T_{Puls}} \int_0^{T_{Puls}} i_f(t) \cos(2\pi f_{Puls}t)\, dt$$

berechnet. Durch das Vorzeichen der Erregerstromindikatorgröße kann nun die 180°-Mehrdeutigkeit eliminiert werden. Ist die Erregerstromindikatorgröße negativ, so liegt die Polradlage in der zuvor berechneten Winkellage. Ist die Erregerstromindikatorgröße positiv, so entspricht die Polradlage einer Position, die 180° versetzt zu der zuvor errechneten Winkellage liegt.

Die Wahl der Winkelabstände $\Delta\gamma_{Puls}$, bei denen die Spannungstestsignale im Schritt S1 eingeprägt werden, sowie die Raumzeigermessungen müssen so erfolgen, dass die Fourier-Koeffizienten korrekt ermittelt werden können. Allgemein müssen für die Berechnung der Koeffizienten Messwerte der Indikatorgrößen im gesamten Winkelbereich von 0 bis 360° vorhanden sein, $n \cdot \Delta\gamma_{Puls} = 360°$ (Vergleiche Schritt S1).

$$i_{f,I}(\gamma + 180°) = -i_{f,I}(\gamma)$$

Da die Erregerstromindikatorgröße jedoch symmetrisch ist, genügt bereits ein Winkelbereich von $n \cdot \Delta\gamma_{Puls} = 180°$ (Vergleiche Schritt S1). zur korrekten Darstellung der Koeffizienten. Für den Statorstromindikator $i_{Puls,I}(\gamma)$ gilt:

$$i_{Puls,I}(\gamma) = i_{Puls,I}(\gamma + 180°)$$

so dass auch hier ein Winkelbereich von 180° zur Ermittlung der Koeffizienten ausreicht.

Weiterhin sollten die Winkelabstände $\Delta\gamma_{Puls}$ so gewählt werden, dass sie durch die Treiberschaltung 2 gut realisiert werden können. Bei Wahl einer Winkeldifferenz von $\Delta\gamma_{Puls} = 60°$ (n=3 oder n=6) ist vorteilhaft, dass nur die natürlichen Schaltzustände der Treiberschaltung 2 geschaltet werden müssen. Die Richtungen der eingeprägten Spannungstestsignale liegen somit genau in den Richtungen, in denen auch die Statorwicklungen der elektrischen Maschine 3 liegen. Vor allem bei Mittelspannungsumrichtern, bei denen die Realisation von Spannungstestsignalen mit kleiner Amplitude in beliebiger Richtung recht ungenau ist, erhält man durch diese Wahl der Winkeldifferenz wesentlich exaktere Ergebnisse.

**Bezugszeichenliste**

| | |
|---|---|
| 1 | Motorsystem |
| 2 | Treiberschaltung |
| 3 | Elektrische Maschine |
| 4 | Steuereinheit |
| 5 | Phasenleitungen |
| 6 | Erregerleitung |
| 7 | Erregerschaltung |
| 8 | Vorrichtung zur Messung der Phasenströme |
| 9 | Vorrichtung zur Messung des Erregerstroms |
| 21 | Halbleiterschalter |
| 22 | Inverterschaltungen |
| 23 | B6-Umrichter |
| 31 | Statorwicklung |
| 32 | Erregerwicklung |
| 33 | Rotor |
| 71 | Erregerstromumrichter |

**Patentansprüche**

1. Verfahren zum Bestimmen einer Polradlage ($\gamma$) einer elektrisch erregten elektrischen Maschine (3), umfassend die folgenden Schritte:

   - Einprägen von Spannungstestsignalen bei mehreren Raumzeigerwinkeln mit einer Grundfrequenz, die in einem Frequenzbereich liegt, in dem bei insbesondere um 90° versetzten Raumzeigerwinkeln ein Admittanzunterschied vorliegt;
   - Ermitteln der jeweiligen resultierenden Werte einer Erregerstromindikatorgröße ($i_{f,l}$) als Fourier-lioeffizienten des aus dem Spannungstestsignal resultieren Erregerstroms bezüglich der Grundfrequenz des Spannungstestsignals bei den entsprechenden Raumzeigerwinkeln; und
   - Bestimmen der Polradlage ($\gamma$) anhand des Verlaufs der Erregerstromindikatorgröße ($i_{f,l}$).

2. Verfahren nach Anspruch 1, wobei die Polradlage ($\gamma$) an der Position eines Minimums des Verlaufs der Erregerstromindikatorgröße ($i_{f,l}$) bestimmt wird.

3. Verfahren nach Anspruch 2, wobei die Amplituden des ungeraden und geraden Anteils der Grundschwingung der Erregerstromindikatorgröße ($i_{f,l}$) ermittelt werden, wobei die Polradlage ($\gamma$) aus den Amplituden des ungeraden und geraden Anteils ermittelt wird.

4. Verfahren nach Anspruch 1, umfassend die weiteren Schritte:

   - Ermitteln der jeweiligen resultierenden Werte einer Statorstromindikatorgröße ($i_{Puls,l}$) als Fourier-Koeffizienten des aus dem Spannungstestsignal resultierenden Statorstroms bezüglich der Grundfrequenz des Spannungstesisignals bei den entsprechenden Raumzeigerwinkeln; und
   - Bestimmen der Polradlage ($\gamma$) anhand des jeweiligen Verlaufs der Statorstromindikatorgröße ($i_{Puls,l}$) und der Erregerstromindikatorgröße ($i_{f,l}$).

5. Verfahren nach Anspruch 4, wobei die Polradlage ($\gamma$) als die Winkellage bestimmt wird, bei der der Verlauf der Statorstromindikatorgröße ($i_{Puls,l}$) ein lokales Maximum aufweist und die entsprechende Erregerstromindikatorgröße ($i_{f,l}$) ein negatives Vorzeichen aufweist.

6. Verfahren nach Anspruch 4 oder 5, wobei die Amplituden des ungeraden und geraden Anteils der zweiten Harmonischen der Statorstromindikatorgröße ($i_{Puls,l}$) ermittelt werden, wobei eine mehrdeutige Angabe einer Polradlage ($\gamma$) aus den Amplituden des ungeraden und geraden Anteils ermittelt wird, wobei ein weiteres Spannungstestsignal in Richtung einer vorgegebenen geschätzten Polradlage ($\gamma$) eingeprägt wird, um die Mehrdeutigkeit durch das Vorzeichen der dann gemessenen Erregerstromindikatorgröße ($i_{f,l}$) zu eliminieren.

7. Verfahren nach einem der Ansprüche 1 bis 6, wobei das Spannungstestsignal in Form von periodischen Rechteckimpulsen eingeprägt wird.

8. Vorrichtung zum Bestimmen einer Rotorlage einer elektrisch erregten elektrischen Maschine (3); wobei die Vorrichtung ausgebildet ist, um:

   - Spannungstestsignale bei mehreren Raumzeigerwinkeln mit einer Grundfrequenz einzuprägen, die in einem Frequenzbereich liegt, in dem bei insbesondere um 90" versetzten Raumzeigerwinkeln ein Admittanzunterschied vorliegt;
   - die jeweiligen resultierenden Werte einer Erregerstromindikatorgröße ($i_{f,l}$) als Fourier-Koeffizienten des aus dem Spannungstestsignal resultieren Erregerstroms bezüglich der Grundfrequenz des Spannungstestsignals bei den entsprechenden Raumzeigerwinkeln zu ermitteln; und
   - die Rotorlage anhand des Verlaufs der Erregerstromindikatorgröße ($i_{f,l}$) zu bestimmen.

9. Computerprogrammprodukt, das einen Programmcode enthält, der, wenn er auf einer Datenverarbeitungsvorrichtung ausgeführt wird, das Verfahren nach einem der Ansprüche 1 bis 7 durchführt.

**Claims**

1. Method for determining a rotor position ($\gamma$) of an electrically excited electrical machine (3), comprising the following steps:

   - injecting voltage test signals at a plurality of space vector angles with a fundamental frequency which lies in a frequency range in which there is a difference in admittance in space vector angles which are, in particular, offset by 90°;
   - calculating the respective resulting values of an excitation current indicator variable $i_{f,l}$ as Fourier coefficients of the excitation current resulting from the voltage test signal with reference to the fundamental frequency of the voltage test signal at the corresponding space vector angles; and
   - determining the rotor position ($\gamma$) on the basis of the profile of the excitation current indicator variable $i_{f,l}$.

2. Method according to Claim 1, wherein the rotor position ($\gamma$) is determined at the position of a minimum of the profile of the excitation current indicator variable $i_{f,l}$.

3. Method according to Claim 2, wherein the amplitudes of the odd and even component of the fundamental oscillation of the excitation current indicator variable $i_{f,l}$ are calculated, wherein the rotor position ($\gamma$) is calculated from the amplitudes of the odd and even component.

4. Method according to Claim 1, comprising the further steps of:

   - calculating the respective resulting values of a stator current indicator variable $i_{Puls,l}$ as Fourier coefficients of the stator current resulting from the voltage test signal with reference to the fundamental frequency of the voltage test signal at the corresponding space vector angles; and
   - determining the rotor position ($\gamma$) on the basis of the respective profile of the stator current indicator variable $i_{Puls,l}$ and the excitation current indicator variable $i_{f,l}$.

5. Method according to Claim 4, wherein the rotor position ($\gamma$) is determined as the angular position at which the profile of the stator current indicator variable $i_{Puls,l}$ has a local maximum and the corresponding excitation current indicator variable $i_{f,l}$ has a negative mathematical sign.

6. Method according to Claim 4 or 5, wherein the amplitudes of the odd and even component of the second harmonic of the stator current indicator variable $i_{Puls,l}$ are calculated, wherein an ambiguous indication of a rotor position ($\gamma$) is calculated from the amplitudes of the odd and even component, wherein a further voltage test signal is injected in the direction of a predefined estimated rotor position ($\gamma$) in order to eliminate the ambiguity by means of the mathematical sign of the then measured excitation current indicator variable $i_{f,l}$.

7. Method according to any of Claims 1 to 6, wherein the voltage test signal is injected in the form of periodic square-wave pulses.

8. Device for determining a rotor position of an electrically excited electrical machine (3), wherein the device is designed to:

   - inject voltage test signals at a plurality of space vector angles with a fundamental frequency which lies in a frequency range in which there is a difference in admittance in space vector angles which are, in particular, offset by 90°;
   - calculate the respective resulting values of an excitation current indicator variable $i_{f,l}$ as Fourier coefficients of the excitation current resulting from the voltage test signal with reference to the fundamental frequency of the voltage test signal at the corresponding space vector angles; and
   - determine the rotor position on the basis of the profile of the excitation current indicator variable $i_{f,l}$.

9. Computer program product which contains a program code that, when executed on a data processing device, performs the method according to any of Claims 1 to 7.

**Revendications**

1. Procédé pour déterminer la position d'une roue polaire ($\gamma$) d'une machine électrique (3) excitée électriquement, comprenant les étapes consistant à :

   - appliquer des signaux de test de tension pour plusieurs angles de vecteur spatial ayant une fréquence fondamentale se situant dans une plage de fréquences dans laquelle il existe notamment une différence d'admittance pour des angles de vecteur spatial décalés de 90° ;
   - obtenir la valeur résultante respective d'une grandeur indicatrice de courant d'excitation ($i_{f,I}$) en tant que coefficients de Fourier du courant d'excitation résultant du signal de test de tension part rapport à la fréquence fondamentale du signal de test de tension pour les angles de vecteur spatial correspondants ; et
   - déterminer la position ($\gamma$) de la roue polaire sur la base de la courbe de variation de la grandeur indicatrice de courant d'excitation ($i_{f,I}$).

2. Procédé selon la revendication 1, dans lequel la position ($\gamma$) de la roue polaire est déterminée à la position d'un minimum de la courbe de variation de la grandeur indicatrice de courant d'excitation ($i_{f,I}$).

3. Procédé selon la revendication 2, dans lequel les amplitudes des parties impaire et paire de l'oscillation fondamentale de la grandeur indicatrice de courant d'excitation ($i_{f,I}$) sont déterminées, dans lequel la position ($\gamma$) de la roue polaire est déterminée à partir des amplitudes des parties impaire et paire.

4. Procédé selon la revendication 1, comprenant les étapes supplémentaires consistant à :

   - obtenir les valeurs résultantes respectives d'une grandeur indicatrice de courant de stator ($i_{puls,I}$) en tant que coefficients de Fourier du courant de stator résultant du signal de test de tension par rapport à la fréquence fondamentale du signal de test de tension pour des angles de vecteur spatial correspondants ; et
   - déterminer la position ($\gamma$) de la roue polaire sur la base de la courbe de variation respective de la grandeur indicatrice de courant de stator ($I_{puls,I}$) et de la grandeur indicatrice de courant d'excitation ($i_{f,I}$).

5. Procédé selon la revendication 4, dans lequel la position ($\gamma$) de la roue polaire est déterminée en tant que position angulaire pour laquelle la courbe de variation de la grandeur indicatrice de courant de stator ($i_{puls,I}$) présente un maximum local et la grandeur indicatrice de courant de d'excitation ($i_{f,I}$) correspondante présente un signe négatif.

6. Procédé selon la revendication 4 ou 5, dans lequel les amplitudes des parties impaire et paire du deuxième harmonique de la grandeur indicatrice de courant de stator ($i_{puls,I}$) sont déterminées, dans lequel une valeur ambiguë d'une position ($\gamma$) de la roue polaire est obtenue à partir des amplitudes des parties impaire et paire, dans lequel un autre signal de test de tension est appliqué dans la direction d'une position ($\gamma$) de roue polaire estimée prédéterminée afin de lever l'ambiguïté au moyen du signe de la grandeur indicatrice de courant de d'excitation ($i_{f,I}$) alors mesurée.

7. Procédé selon l'une quelconque des revendications 1 à 6, dans lequel le signal de test de tension est appliqué sous la forme d'impulsions rectangulaires périodiques.

8. Dispositif destiné à déterminer la position d'un rotor d'une machine électrique (3) excitée électriquement, dans lequel le dispositif est conçu pour :

   - appliquer des signaux de test de tension pour plusieurs angles de vecteur spatial ayant une fréquence fondamentale se situant dans une plage de fréquences dans laquelle il existe notamment une différence d'admittance pour des angles de vecteur spatial décalés de 90° ;
   - obtenir les valeurs résultantes respectives d'une grandeur indicatrice de courant d'excitation ($i_{f,I}$) en tant que coefficients de Fourier du courant d'excitation résultant du signal de test de tension par rapport à la fréquence fondamentale du signal de test de tension pour des angles de vecteur spatial correspondants ; et
   - déterminer la position du rotor sur la base de la courbe de variation de la grandeur indicatrice de courant d'excitation ($i_{f,I}$).

9. Produit de programme d'ordinateur contenant un code de programme qui, lorsqu'il est exécuté sur un dispositif de traitement de données, met en oeuvre le procédé selon l'une des revendications 1 à 7.

EP 2 843 828 B1

Fig. 1

13

Fig. 2

Fig. 3

EP 2 843 828 B1

Einprägen vom n Spannungstestsignalen bei Winkeln $\gamma_{Puls,I} = i \cdot \Delta\gamma_{Puls}$ und Messen der Strom antworten $i_E(t)$, $i_{Puls}(t)$ — S1

Berechnung von Indikatorgrößen bei Winkeln $\gamma_{Puls,I}$ — S2

Berechnung von Fourierkoeffizienten — S3

S4

Auswertemethode A

Auswertemethode B

S4b

Berechnung der Polradlage aus $i_{f,I,a1}$ , $i_{f,I,b1}$

S4a

Berechnung der Polradlage mit 180° Mehrdeutigkeit

Einprägung eines weiteren Testsignals zur Eliminierung der 180° Mehrdeutigkeit

S5b

Fig. 4

Fig. 5

Fig. 6

EP 2 843 828 B1

a)

b)

Fig. 7

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DRUCKSCHRIFT J. HOLTZ.** Initial Rotor Polarity Detection and Sensorless Control of PM Synchronous Machines. *Industry Applications Conference, 41st IAS Annual Meeting, Conference Record of the 2006 IEEE,* Oktober 2006, vol. 4 (8.-12.), 2040-2047

- **DRUCKSCHRIFT FEUERSÄNGER, S. ; PACAS, M.** Initial Rotor Position Detection in Electrically Excited Medium Voltage Synchronous Machines. *PCIM 2012,* 08. Mai 2012